Europäisches Patentamt

(19) European Patent Office

Office européen des brevets

(11) Publication number : **0 207 618**
**B1**

(12) # EUROPEAN PATENT SPECIFICATION

(45) Date of publication of patent specification :
07.03.90

(51) Int. Cl.⁵ : **B 62 K 11/04, B 62 M 7/02**

(21) Application number : 86303917.8

(22) Date of filing : 22.05.86

(54) Motorcycle.

(30) Priority : 22.05.85 JP 109899/85

(43) Date of publication of application :
07.01.87 Bulletin 87/02

(45) Publication of the grant of the patent :
07.03.90 Bulletin 90/10

(84) Designated contracting states :
DE FR GB

(56) References cited :
EP--A-- 0 082 496
FR--A-- 1 152 863
FR--A-- 2 466 386
FR--A-- 2 480 699
FR--E-- 65 415
GB--A-- 768 547
GB--A-- 2 015 949
US--A-- 4 139 072
US--A-- 4 323 135

(73) Proprietor : HONDA GIKEN KOGYO KABUSHIKI
KAISHA
1-go, 1-ban, Minami-Aoyama 2-chome
Minato-ku Tokyo 107 (JP)

(72) Inventor : Tsuboi, Masaharu
2370-17, Ooaza-Horigane
Sayama-shi Saitama (JP)

(74) Representative : Leale, Robin George et al
FRANK B. DEHN & CO. Imperial House 15-19
Kingsway
London WC2B 6UZ (GB)

## Description

This invention relates to motorcycle frame structures, including rear suspension mounting systems.

Conventional motor cycle design has generally employed a frame system which may or may not include the engine structure as a portion thereof. To this frame structure various components of the motorcycle are attached. Separately attached are the rear suspension, the cushion assembly for the rear suspension, and other components such as the footpegs and the rectractable stand. Consequently, assembly of the motorcycle may be complicated by the requirement to attach individual components to the frame itself. As a result, advantageous employment of sub-assemblies cannot be realised.

In such motorcycles, the frame structure to which the many components are assembled must be able to support the varying forces on the vehicle which are encountered during use. Conventional frame structures, whether or not they incorporate the engine as a component thereof, comprise main body frame members and downtube members which are fabricated from multiple components, or by bending of such components, to generally define a diamondshaped structure which requires the individual frame elements to withstand substantial stresses. In some systems, the stress is in part withstood by the substantial engine structure so that weight can be minimized. However, such conventional systems still require relatively sturdy structures and multiple mounting plates and other devices to give them the necessary strength.

Typical of such prior art motorcycle frame structures is that shown in FR 2480699, which comprises a frame formed of two substantially triangular frame members each fixed at its frontmost apex to a head pipe and having a plurality of cross pipes holding the triangular frame members in a spaced relationship at all points other than the foremost apex. The frame has a large number of brackets welded to it using which the various motorcycle components such as the engine and rear swing arm can be mounted to the frame. The frame suffers from the disadvantageous complex method of construction discussed above.

According to the present invention there is provided a motorcycle comprising:

a frame including a head pipe (2) and left and right main pipes (3) extending rearwardly and downwardly on the motorcycle from said head pipe;

a rear suspension bracket (5) extending transversely on the motorcycle between and affixed to said main pipes and including substantially vertically extending left and right mounting portions (51);

left and right side brackets (7) extending substantially vertically and parallel to said left and right mounting portions and affixed to said main pipes outwardly of said rear suspension bracket; and

a rear swing arm assembly (11) including a swing arm having left and right pivot portions (12), said left pivot portion being pivotally mounted between said left mounting portion and said left side bracket and said right pivot portion being pivotally mounted between said right mounting portion and said right side bracket.

Preferably the motorcycle further comprises: left and right down pipes (4) extending downwardly from said head pipe; and an engine (6) positioned between said main pipes and between said down pipes, said engine, said main pipes and said down pipes forming a truss framework.

Preferably the engine is affixed to said rear suspension bracket.

Two embodiments of the invention will now be described by way of example and with reference to the accompanying drawings, in which:

Figure 1 is a side elevation of a motorcycle according to the invention;

Figure 2 is a perspective view of the frame structure of the motorcycle of Figure 1;

Figure 3 is a similar perspective view but illustrating additional frame elements and the incorporation of the motorcycle engine into the frame structure thereof;

Figure 4 is a side view of the central frame structure;

Figure 5 is a detailed side elevation illustrating a left side bracket of the frame structure, and components assembled therewith;

Figure 6 is a cross-sectional view taken along line VI-VI of Figure 5;

Figure 7 is a cross-sectional view taken along line VII-VII of Figure 5;

Figure 8 is a cross-sectional view taken along line VIII-VIII of Figure 5;

Figure 9 is a rear elevation view of a rear suspension bracket;

Figure 10 is a plan view of the bracket of Figure 9;

Figure 11 is a side view of the bracket of Figure 9; and

Figure 12 is a side elevation similar to Figure 1 but showing a second embodiment.

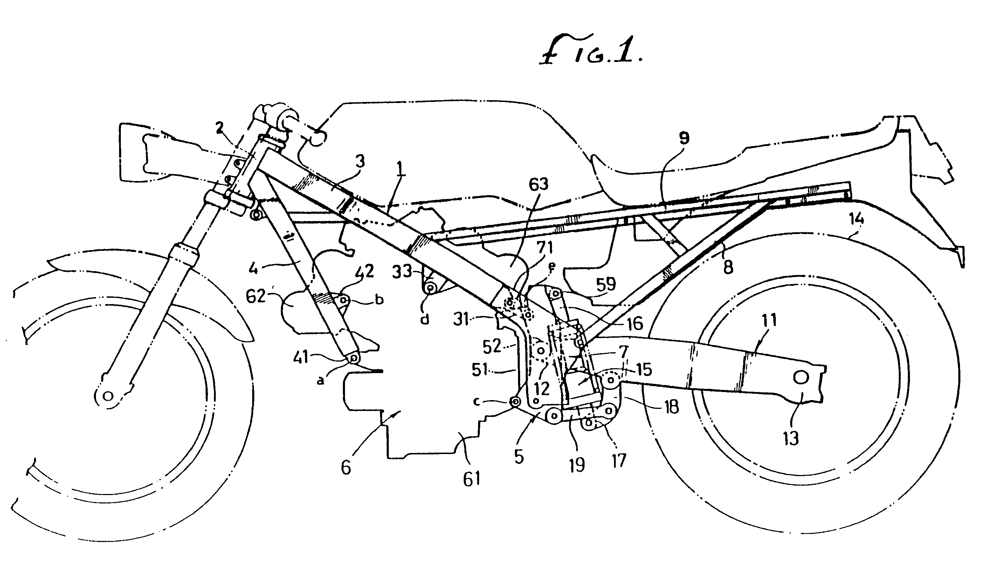

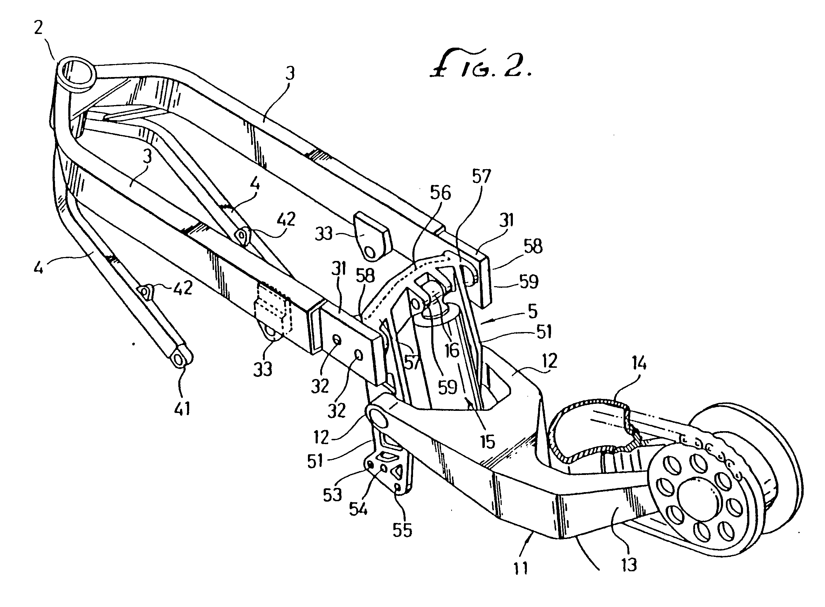

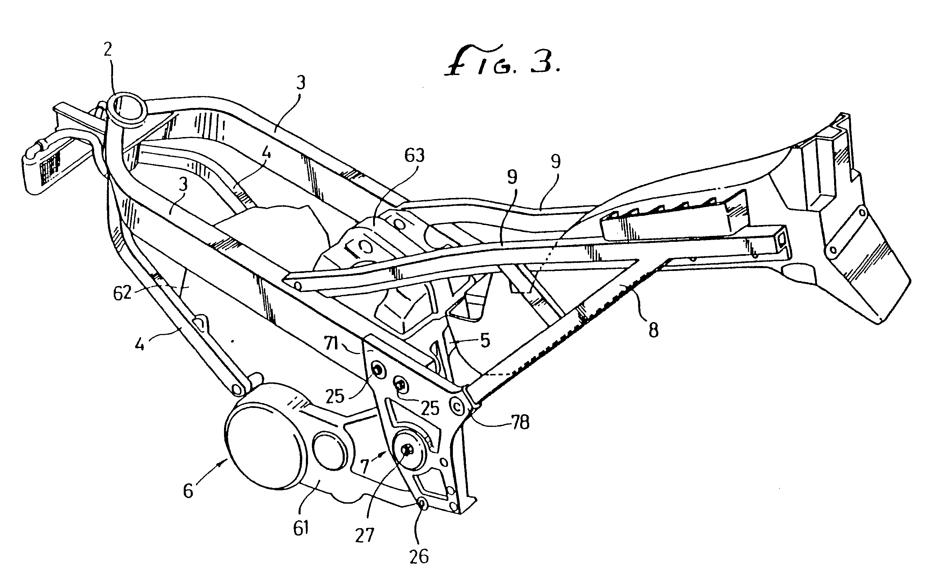

Turning in detail to the drawings, Figure 1 illustrates a first embodiment of a motorcycle according to the present invention, including a frame, generally designated 1, employing a conventional head pipe 2, left and right main body pipes 3 and left and right down pipes 4. The main body pipes 3 and down pipes 4 extend rearwardly and downwardly from the head pipe 2 and are straight as seen in side view. The main pipes 3 and down pipes 4 are each formed of a rectangular pipe whose cross-section has its longest dimension in the vertical direction. As can be seen from Figures 2 and 3, the main pipes 3 and down pipes 4 emanate from the head pipe 2 and extend outwardly to avoid the centrally mounted engine, generally designated 6.

The left and right main pipes 3 extend rearwardly to mounting members 31. Each of the mounting members 31 at the end of the main pipes 3 has two mounting holes 32 arranged fore-and-aft therein. Extending between the mounting members 31 and removably mounted to the frame by means of the mounting holes 32 is a rear suspension bracket, generally designated 5. The bracket 5 extends between the main pipes 3 to provide additional structure to the overall assembly.

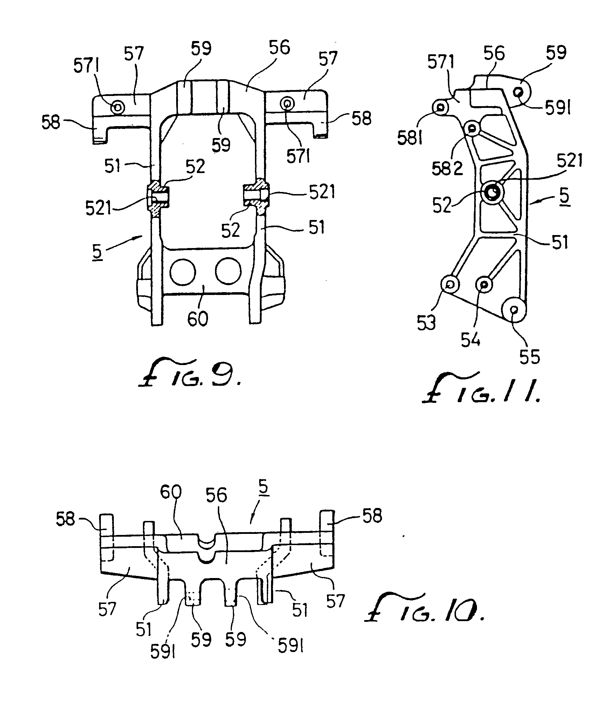

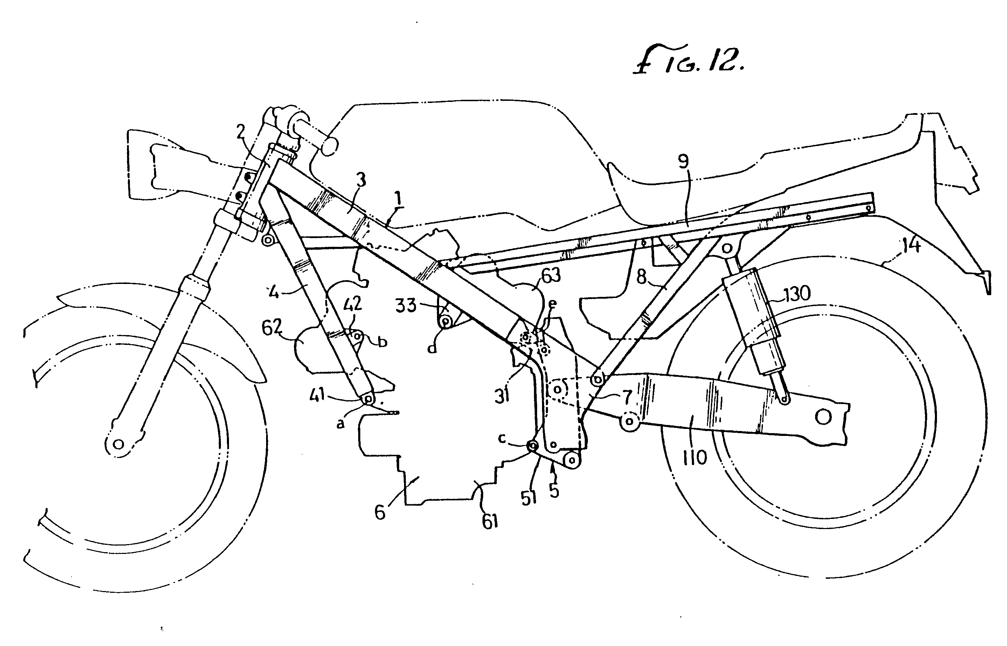

The construction of the rear suspension bracket 5 can be best seen in Figures 9, 10 and 11. An upper transverse portion 56 extends across between projections 57 at each end thereof. Extending vertically downwardly between the transverse portion 56 and each of the two projections 57 are two mounting portions 51. Outwardly of the two projections 57 are mounting lugs 58. Mounting holes 581 and 582 face outwardly from the mounting lugs 58. These mouting holes 581 and 582 cooperate with the mounting holes 32 in the mounting members 31. Stays 59 having axially aligned holes 591 extend rearwardly from the transverse portion 56.

The mounting portions 51 of the bracket 5 are each formed with a mounting boss 52 having a hole 521 therethrough. The holes 521 are axially aligned. At the bottom of the mounting portions 51 is a transverse stay 60 forming an additional brace for rigidity. At the bottom of the rear suspension bracket 5 are three mounting holes 53, 54 and 55 in each of the mounting portions 51.

Outwardly of the mounting members 31 and extending parallel to the mounting portions 51 of the bracket 5 are left and right side brackets, generally designated 7. The side brackets 7 are each provided at the upper portion thereof with a mounting portion 71. Two mounting holes 72 are arranged in fore-and-aft orientation on each of the mounting portions 71 to cooperate with the mounting holes 32 in the mounting members 31 and the mounting holes 581 and 582 in the rear suspension bracket 5. Fasteners 25 rigidly fix the members together with the mounting members 31 sandwiched between the rear suspension bracket 5 and the left and right side brackets 7.

At the lower portion of each side bracket 7 are front and rear mounting holes 73 and 74. Above the rear mounting hole 74 on each bracket are two upper and lower mounting holes 75 and 76. Finally, a mounting hole 77 is formed in a vertically intermediate position, while a mounting hole 79 is formed at a corner 78 projecting rearwardly from the upper portion 71 of each side bracket 7.

An engine, generally designated 6, having a crankcase area 61 and fore-and-aft cylinder heads 62 and 63 respectively, is arranged centrally on the motorcycle frame 1. The crankcase 61 of the engine 6 is connected at its forward opposite side surfaces to the ends of the down pipes 4 at attachment portions 41, also designated a in Figure 1. The forward cylinder head 62 is connected at its opposite side surfaces to stays 42 projecting laterally from the down tubes 4, also designated b. The crankcase 61 is also connected at its rear portion, at opposite side surfaces thereof, to the left and right mounting portions 51 of the rear suspension bracket 5, via the mounting holes 53, also designated c. In addition, the rear cylinder unit 63 is connected at its opposite side surfaces to stays 33 projecting laterally from the main pipes 3, also designated d. Lastly, the rear cylinder unit 63, on the rear surface thereof, is attached to the rear suspension bracket 5 by mounting holes 591, also designated e.

Thus, as shown in the figures, the engine 6 is connected and supported at five points a, b, c, d, and e to the main pipes 3, the down pipes 4 and the rear suspension bracket 5. These connections and the rigid structure of the engine 6 define, with the main pipes 3 and down pipes 4, a triangular truss structure as viewed in side elevation. Further, the rear suspension bracket is also rigidly coupled with the truss structure through its mountings to the main pipes 3 and the engine 6.

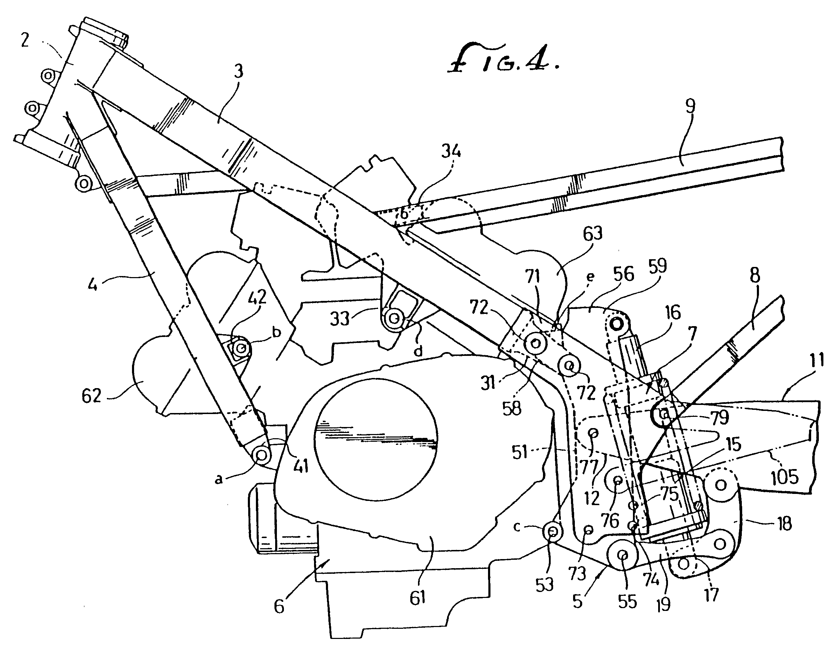

The motorcycle includes a rear swing arm assembly, generally designated 11, which can best be seen in Figures 2 and 4. The assembly 11 is shown to have bifurcated left and right front ends extending to pivot portions 12. Rearwardly, the bifurcated front portions merge into a cantilevered portion 13 for mounting the wheel 14 at one side thereof. The pivot portions 12 are pivotally mounted between the mounting portions 51 of the bracket 5 and the side brackets 7. The mounting hole 77 in each of the side brackets 7 aligns with the holes 521 in the mounting bosses 52 of the mounting portions 51. A bolt 27 is inserted into the mounting hole 77 of the side bracket 7 and is fastened to the head of a pivot bolt 21 of the rear swing arm 11. Thus, the swing arm or suspension 11 is pivotally mounted relative to the frame of the motorcycle through attachment to the brackets 5 and 7.

A cushion member, generally designated 15, is also attached to the brackets at the upper mounting end 16 of the cushion member. The upper mounting end 16 is fixed between the stays 59 by a fastening shaft extending through the holes 591. The other end 17 of the cushion member is associated with two links 18 and 19. The first link 18 is pivotally mounted to the swing arm 11 at one end thereof. The other end of the link 18 is pivotally connected to the mounting end 17 of the cushion member 15. The second link 19 is pivotally connected to the link 18 intermediate its ends and is also pivotally connected to the mounting portions 51 of the rear suspension bracket 5, by way of the mounting holes 55. Thus, all of the rear swing arm assembly is coupled to the bracket 5, including both the swing arm 11 and the cushion member 15. These components may be separately assembled prior to assembly with the overall motorcycle frame. Indeed, the side brackets 7 may be assembled as well through the use of the fasteners 26 associated with mounting holes 54 in the mounting portions 51 of the rear suspension bracket 5 and mounting holes 73 in the side brackets 7.

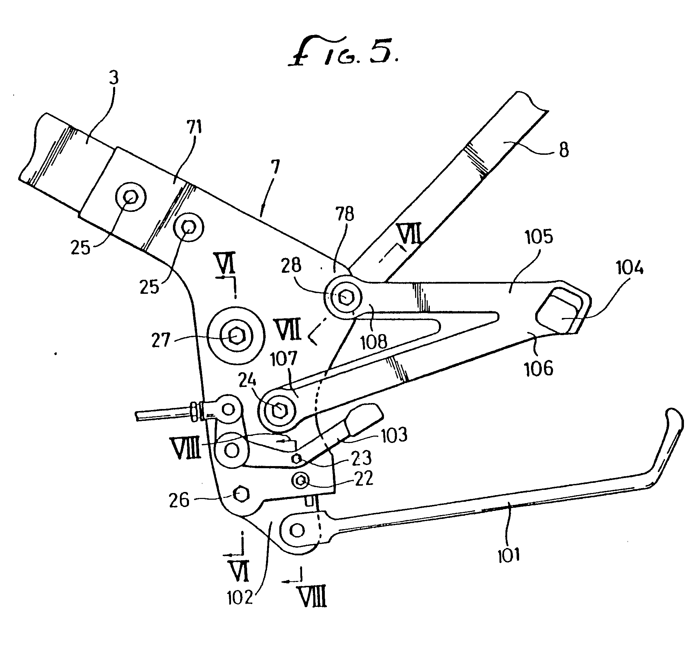

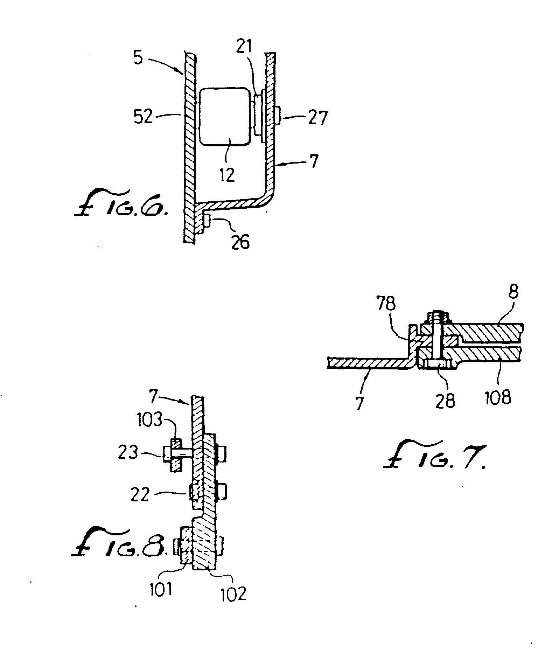

A further sub-assembly is provided for the support of the seat and rear portions of the vehicle. An underpipe 8 extends upwardly and rearwardly from an abutting position in association with the rear portion 78 of each of the side brackets 7. A hole 79 receives a bolt 28 to fix the underpipe 8 to the associated bracket, as illustrated in Figure 7. The underpipes 8 extend upwardly and rearwardly to seat rails 9. The seat rails 9 are secured at their forward ends to the main pipes 3, at stays 34.

Other equipment may be associated with the sub-assembly which includes the side brackets 7. Reference is made to Figure 5 and the cross-sectional views in Figures 6, 7 and 8. A retractable side stand 101 is shown to be connected to one of the side brackets 7 by means of a bracket 102. The bracket 102 is held in place to one side of the left side bracket 7 by fasteners 22 and 23. The fastener 23 also pivotally mounts a shift pedal 103, as can be seen in Figure 8. In addition, footpegs 104 may also be attached to the side brackets 7. A support bracket for each footpeg 104 includes two legs 105 and 106 (Figure 5) whose ends 107 and 108 are secured to a respective side bracket 7. Fasteners 24 and 28 extend through the ends of the support bracket for the footpeg 104 and into mounting holes 76 and 77 of the side member 7. Thus, a number of components may be separately assembled with a side bracket rather than requiring individual mounting by way of accompanying hardware on the frame itself.

A second embodiment of the invention is illustrated in Figure 12, which incorporates the same reference numbers where identical or equivalent elements are concerned. Differing from the first embodiment is the rear swing arm assembly, in which the rear swing arm is shown to be a true suspension 110 having cushion members 130 on each side thereof extending from the extensions of the suspension 110 upwardly to the frame structure constituting the support for the back portion of the vehicle.

Thus motorcycle layouts have been disclosed in these embodiments of the invention which facilitate assembly, reduce weight and also reduce complexity. By providing a number of mounting points on the side brackets 7 as well as on the rear suspension bracket 5, a plurality of elements may be attached without overcomplicating the main frame with attachment structures. The separate attachment to the said brackets of such items as the footpegs, the retractable stand, and the gear shift pedal or foot brake pedal make pre-assembly of these elements possible without having to operate directly on the main frame. Assembly of other components, such as the engine, with the main frame can thus be going on independently of the sub-assembly of such components. In addition, the attachment of the rear suspension assembly, including both the swing arm and the cushion member, to brackets rather than directly to the frame allow for sub-assembly as well. Also, this arrangement allows for each disassembly for servicing.

In addition, the overall frame structure of the motorcycle incorporating the engine therein and made up of stright sections as seen in side view to form triangular truss sections allows for lighter, sturdier construction. The brackets also provide for a rigid tying together of the frame components and engine, to enhance the structural integrity.

Thus improved motorcycle structures have been disclosed which facilitate assembly, reduce weight and also reduce complexity.

## Claims

1. A motorcycle comprising :

a frame including a head pipe (2) and left and right main pipes (3) extending rearwardly and downwardly on the motorcycle from said head pipe ;

a rear suspension bracket (5) extending transversely on the motorcycle between and affixed to said main pipes and including substantially vertically extending left and right mounting portions (51) ;

left and right side brackets (7) extending substantially vertically and parallel to said left and right mounting portions and affixed to said main pipes outwardly of said rear suspension bracket ; and

a rear swing arm assembly (11) including a swing arm having left and right pivot portions (12), said left pivot portion being pivotally mounted between said left mounting portion and said left side bracket and said right pivot portion being pivotally mounted between said right mounting portion and said right side bracket.

2. A motorcycle as claimed in claim 1, further comprising a cushion member (15) attached at one end to said rear suspension bracket (5) and at a second end to said rear swing arm assembly (11).

3. A motorcycle as claimed in claim 2, wherein said rear swing arm assembly (11) further includes two mounting links, a first of said mounting links (18) being pivotally mounted to said swing arm and to the other of said mounting links (19) which is in turn pivotally mounted to said rear suspension bracket (5), said cushion member (15) being pinned to one of said mounting links.

4. A motorcycle as claimed in any preceding claim, wherein said left and right main pipes are rectangular in cross-section.

5. A motorcycle as claimed in any preceding claim, further comprising :

left and right down pipes (4) extending downwardly from said head pipe ; and

an engine (6) positioned between said main pipes and between said down pipes, said engine, said main pipes and said down pipes forming a truss framework.

6. A motorcycle as claimed in claim 5, wherein said engine is affixed to said rear suspension bracket.

7. A motorcycle as claimed in any preceding claim, further comprising :

footpegs (104) affixed to said side brackets ;

a retractable stand (101) mounted to one said side bracket ; and

a gear shift pedal (103) pivotally mounted to one said side bracket.

**Patentansprüche**

1. Motorrad, bestehend aus :

einem Rahmen, umfassend ein vorderes Rohr (2) und linke und rechte Hauptrohre (3), die sich am Motorrad vom vorderen Rohr nach hinten und nach unten erstrecken ;

einen hinteren Hängeträger (5), der sich in Querrichtung am Motorrad zwischen und befestigt an den Hauptrohren erstreckt und sich im wesentlichen in vertikaler Richtung erstreckende linke und rechte Montageabschnitte (51) umfaßt ;

linke und rechte Seitenträger (7), die sich im wesentlichen vertikal und parallel zu den linken und rechten Montageabschnitten erstrecken und an den Hauptrohren außerhalb des hinteren Hängeträgers befestigt sind ; und

eine hintere Schwenkarmanordnung (11), umfassend einen Schwenkarm, der linke und rechte Schwenkabschnitte (12) aufweist, wobei der linke Schwenkabschnitt schwenkbar zwischen dem linken Montageabschnitt und dem linken Seitenträger angebracht ist und der rechte Schwenkabschnitt schwenkbar zwischen dem rechten Montageabschnitt und dem rechten Seitenträger angebracht ist.

2. Motorrad nach Anspruch 1, weiter bestehend aus einem Dämpfungselement (15), das bei einem Ende an dem hinteren Hängeträger (5) und bei einem zweiten Ende an der hinteren Schwenkarmanordnung (11) angebracht ist.

3. Motorrad nach Anspruch 2, bei dem die hintere Schwenkarmanordnung (11) weiter zwei Montageverbindungsglieder umfaßt, wobei ein erstes der Montageverbindungsglieder (18) am Schwenkarm und am anderen der Montageverbindungsglieder (19) schwenkbar angebracht ist, das wiederum am hinteren Hängeträger (5) schwenkbar angebracht ist, wobei das Dämpfungsglied (15) an einem der Montageverbindungsglieder befestigt ist.

4. Motorrad nach einem beliebigen vorhergehenden Anspruch, bei dem die linken und rechten Hauptrohre im Querschnitt rechteckförmig sind.

5. Motorrad nach einem beliebigen vorhergehenden Anspruch, weiter bestehend aus :

linken und rechten nach unten führenden Rohren (4), die sich vom Hauptrohr nach unten erstrecken : und

einen Motor (6), der zwischen den Hauptrohren und zwischen den nach unten führenden Rohren angeordnet ist, wobei die Maschine, die Hauptrohre und die nach unten führenden Rohre einen Fachwerkrahmen bilden.

6. Motorrad nach Anspruch 5, bei dem die Maschine an dem hinteren Hängeträger befestigt ist.

7. Motorrad nach einem beliebigen vorhergehenden Anspruch, weiter bestehend aus :

an den Seitenträgern befestigten Fußstiften (104) ;

einem an einem Seitenträger angebrachten zurückschiebbaren Ständer (101) und

einem schwenkbar an dem einen Seitenträger angebrachten Gangschaltpedal (103).

**Revendications**

1. Motocyclette comprenant un cadre comportant un tube avant (2) et des tubes principaux gauche et droit (3) s'étendant vers l'arrière et vers le bas, sur la motocyclette, à partir de ce tube avant, une ferrure de suspension arrière (5) s'étendant transversalement, sur la motocyclette, en étant fixée sur eux, entre les tubes principaux et comportant des parties de montage gauche et droite (51) s'étendant d'une manière sensiblement verticale, des ferrures latérales gauche et droite (7) s'étendant d'une manière sensiblement verticale et parallèlement aux parties de montage gauche et droite et fixées sur les tubes principaux à l'extérieur de la ferrure de suspension arrière et un ensemble de bras basculant arrière (11) comprenant un bras basculant comportant des parties de montage pivotant gauche et droite (12), la partie de montage pivotant gauche étant montée de manière pivotante entre la partie de montage gauche et la ferrure latérale gauche et la partie de montage pivotant droite étant montée de manière pivotante entre la partie de montage droite et la ferrure latérale droite.

2. Motocyclette suivant la revendication 1, comprenant en outre un amortisseur (15) fixé à l'une de ses extrémités sur la ferrure de suspension arrière (5) et à une seconde extrémité sur l'ensemble de bras basculant arrière (11).

3. Motocyclette suivant la revendication 2, dans laquelle l'ensemble de bras basculant arrière (11) comprend en outre deux biellettes de montage, une première (18) de ces biellettes de montage étant montée de manière pivotante sur le bras basculant et sur l'autre biellette de montage (19) qui est elle-même montée pivotante sur la ferrure de suspension arrière (5), l'amortisseur (15) étant articulé sur l'une de ces biellettes de montage.

4. Motocyclette suivant l'une quelconque des revendications précédentes, dans laquelle les tuyaux principaux gauche et droit sont à section transversale rectangulaire.

5. Motocyclette suivant l'une quelconque des revendications précédentes, comprenant en outre des tubes descendants gauche et droit (4) s'étendant vers le bas à partir du tube avant et un moteur (6) disposé entre les tubes principaux et entre les tubes descendants, ce moteur, ces tubes principaux et ces tubes descendants formant une ossature stabilisée.

6. Motocyclette suivant la revendication 5, dans laquelle le moteur est fixé sur la ferrure de suspension arrière.

7. Motocyclette suivant l'une quelconque des revendications précédentes, comprenant en outre des repose-pieds (104) fixés sur les ferrures latérales, une béquille rétractable (101) montée sur l'une de ces ferrures latérales et une pédale-sélecteur de vitesses (103) montée de manière pivotante sur l'une de ces ferrures latérales.

FIG.1.

EP 0 207 618 B1

FIG. 2.

FIG. 3.

FIG.4.

EP 0 207 618 B1

# FIG.5.

Fig.6.

Fig.7.

Fig.8.

FIG. 9.

FIG. 11.

FIG. 10.

7

FIG. 12.

EP 0 207 618 B1